# EUROPÄISCHE PATENTSCHRIFT

(11) **EP 0 722 524 B1**
(45) Veröffentlichungstag und Bekanntmachung des Hinweises auf die Patenterteilung: **13.06.2001**
(21) Anmeldenummer: 94922229.3
(22) Anmeldetag: 10.08.1994
(51) Int. Cl.: E03B 3/02, E04D 13/08

(54) **ZISTERNENSYSTEM**
TANK SYSTEM
SYSTEME DE CITERNE

(43) Veröffentlichungstag der Anmeldung: 24.07.1996
(73) Patentinhaber: Widmann, Roland, 88525 Dürmentingen (DE)
(72) Erfinder: Widmann, Roland, 88525 Dürmentingen (DE)
(74) Vertreter: König, Beate, Dipl.-Phys. Dr.
(86) Internationale Anmeldenummer: DE9400920
(87) Internationale Veröffentlichungsnummer: WO9605379

(56) Entgegenhaltungen:
- DE-A- 3 344 812
- DE-A- 4 229 531
- DE-C- 72 845
- FR-A- 390 970
- FR-A- 459 916
- FR-E- 10 272
- US-A- 1 475 120
- US-A- 3 750 886

## Beschreibung

Die Erfindung betrifft ein Zisternensystem mit einer Zisterne, einem Regenwasserzulauf, einem Ablauf für verschmutztes Wasser, einem beweglichen Umleitelement, das ein Auslaufelement zum Leiten des vom Regenwasserzulauf kommenden Regenwassers zum Ablauf für verschmutztes Wasser oder zur Zisterne aufweist, einer Entnahmeleitung, die vom Auslaufelement abzweigt, und einem mit einem Auslauf versehenen Wassersammelbehälter, dessen Füllgrad die Stellung des Auslaufelements bestimmt.

Zisternen sind seit langer Zeit zum Sammeln von Regenwasser in Gebrauch. Mit knapper werdendem Trinkwasser und zunehmenden Kosten des aufbereiteten Wassers wird die Nutzung von Regenwasser und damit der Einsatz von Zisternen interessanter. Insbesondere trifft dies auf Bereiche zu, bei denen der Einsatz von nicht oder nur gering aufbereitetem Regenwasser unbedenklich ist, wie die Verwendung für Waschmaschinen, Toilettenspülung, Autowäsche, Gartenberegnung etc. Nichtsdestoweniger ist es ein Ziel bei der Verwendung von Zisternen, daß die Wasserqualität möglichst hoch ist.

Eine Verschmutzung von Regenwasser tritt infolge von verschmutzten Sammelflächen, z.B. Dächern, aufgrund von Luftschadstoffen, Staub, etc. ein. Bei einsetzenden Niederschlägen wird zunächst der Staub, etc. von den Sammelflächen abgewaschen und gelangt zusammen mit dem Regen z.B. in die Zisternen. Der Mittransport von Feststoffpartikeln kann auch durch die Verwendung von Filtern nicht vollständig verhindert werden. Filter sind im übrigen gegen den Durchsatz von gelösten Schadstoffen wirkungslos und müssen von Zeit zu Zeit gereinigt oder ausgetauscht werden.

Im übrigen ist der Einsatz von Regenrückhaltesystemen, wie sie auch die Zisternen darstellen, für die Auslegung und den Betrieb von Klärwerken vorteilhaft, denn der mit Regenfällen verbundene Wasserüberschuß, der dann in den Klärwerken nicht geklärt werden kann und direkt abgeleitet wird, ist durch Zisternen verringert.

Da Zisternenüberläufe dauernd mit der Kanalisation verbunden sind und ebenso wie die Abwasserleitungen nur im Fall von ergiebigen Regenfällen gespült werden, kann es zu Rückkriechungen von Mikroorganismen oder Kleintieren kommen.

Weiterhin nachteilig bei der Verwendung von Zisternen ist, daß sich auf dem Zisternenboden Sedimente absetzen und daher von Zeit zu Zeit eine Behälterreinigung erforderlich wird.

Aus der DE-U-85 22 499 ist eine Einrichtung zum Sammeln von Regenwasser mit Merkmalen wie eingangs erwähnt bekannt. Die Einrichtung umfaßt eine etwa in Mitte ihrer Längserstreckung schwenkbar gelagerte Rinne, von der mittig nach unten ein Auslauf mit kleinem Querschnitt fortführt. Das anfänglich noch verunreinigte Regenwasser wird über den Auslauf in einen Schmutzwasserbehälter geleitet und nach Fließen einer bestimmten Regenmenge wird die Rinne verschwenkt und das Regenwasser fließt in den Brauchwasserbehälter. Nachteilig bei dieser Einrichtung ist, daß es zu einer Umkehr der Fließrichtung in der Rinne kommt und die Zeitpunkte der Umleitung in Schmutzwasser- bzw. Brauchwasserbehälter, d.h. die Schaltpunkte, nicht klar definiert sind. Auf der Reinwasserseite sammeln sich anfangs Schmutzreste an, die dann in den Brauchwasserbehälter gespült werden. Außerdem ist die Einrichtung nicht zum Sammeln großer Wassermengen geeignet, bei denen es zu keiner klaren Wasserwegtrennung kommt. Des weiteren ist die Einrichtung schmutzempfindlich.

Aus der DE-C-371 743 ist eine Vorrichtung zum selbsttätigen Sammeln von Regenwasser bekannt, die einen an Gewichten aufgehängten Auffangbehälter, einen in diesen führenden Sammelbehälter mit zusperrbarem Boden und einem Überlauf sowie einen Speicherbehälter umfaßt, der durch den Überlauf gefüllt wird. Anfänglicher Regen durchläuft den Sammelbehälter und füllt den Auffangbehälter. Danach wird der Boden des Sammelbehälters geschlossen, der sich mit reinerem Regenwasser füllt, das dann durch den Überlauf in den Speicherbehälter fließt. Mit Ende des Regens wird der Auffangbehälter entleert. Bei dieser Vorrichtung besteht die Gefahr einer Verstopfung durch grobe Teile. Die Umschaltung zum Speicherbehälter wird nicht an einem fixen Schaltpunkt durchgeführt, wobei die beweglichen Teile mit Schmutzwasser in Kontakt gelangen. Durch den Überlauf des Sammelbehälters kann es bei sehr starkem Regen dazu kommen, daß schon zu Beginn Regenwasser direkt in den Speicherbehälter fließt. Die Vorrichtung ist verhältnismäßig kompliziert mit vielen Teilen (Behälter, Leitungen) aufgebaut und entsprechend wartungsintensiv.

In der DE-U-85 14 204 ist eine Fallrohrklappe beschrieben, die in ein Regenwasserfallrohr eingebaut ist und zur Trennung von verschmutztem und reinerem Regenwasser vorgesehen ist. Mit Regenbeginn wird ein aufgehängter, mit der Klappe verbundener Behälter mit Auslauf gefüllt und schließt schließlich die Klappe, so daß das Regenwasser dann in einen Sammelbehälter fließt. Dabei kann es leicht zu Verstopfung des Behälterauslaufs kommen, so daß eine Rückschaltung nicht mehr erfolgt und anschließend sämtliches Wasser in den Sammelbehälter geleitet wird. Ist der Regen sehr stark, kann es ebenfalls dazu kommen, daß Regenwasser in den Sammelbehälter fließt. Des weiteren hängt die Umschaltung auch von den Reibungsverhältnissen ab. Die Fallrohrklappe umfaßt eine Reihe von beweglichen Teilen, z.B. auch eine Feder, ist entsprechend empfindlich und verhältnismäßig wartungsintensiv.

Die beschriebenen bekannten Anordnungen haben sämtlich die Eigenschaft, daß die Schaltabläufe nicht genau festgelegt sind und unpräzise ablaufen können.

Der Erfindung liegt die Aufgabe zugrunde, ein Zisternensystem zu schaffen, bei dem möglichst wenig Schadstoffe in die Zisterne eingetragen werden und dort abgelagert werden.

Diese Aufgabe ist erfindungsgemäß bei einem Zisternensystem mit den Merkmalen des Anspruchs 1 gelöst. Vorteilhafte Weiterbildungen des erfindungsgemäßen Zisternensystems sind Gegenstand der abhängigen Ansprüche.

Ein erfindungsgemäßes Zisternensystem umfaßt somit eine Zisterne, einen Regenwasserzulauf und einen Ablauf für verschmutztes Wasser. Ein ein Auslaufelement aufweisendes bewegliches Umleitelement ist zum Leiten des vom Regenwasserzulauf kommenden Regenwassers zum Ablauf für verschmutztes Wasser oder zur Zisterne vorgesehen. Eine Entnahmeleitung zweigt vom Auslaufelement oder bereits vom Zulauf ab. Des weiteren ist ein mit einem Auslauf versehener Wassersammelbehälter vorgesehen, dessen Füllgrad die Stellung des Auslaufelements bestimmt. Erfindungsgemäß ist das Einlaufende der Entnahmeleitung in flachem Winkel zur allgemeinen Strömungsrichtung im Auslaufelement angeordnet.

Das erfindungsgemäße Zisternensystem weist vorteilhaft einen mechanisch arbeitenden Schaltmechanismus auf, der das erste, noch Schmutz enthaltende Niederschlagswasser direkt in das Abwassersystem leitet und erst nach Ablauf einer bestimmten Wassermenge das Regenwasser in die Zisterne einlaufen läßt. Dabei ist eine geringe Anzahl von Bauteilen vorgesehen, so daß der Montage- und Wartungsaufwand gering ist. Auch ist das System wenig schmutzanfällig und damit auch wenig störanfällig. Darüber hinaus ist es gegen Ausfälle der Stromversorgung unempfindlich, da es nur aus mechanischen Teilen besteht. Ferner ist das System an die verschiedenen Dachflächen anpaßbar. Dies ist mit geringem Einstellaufwand möglich.

Die Teile des erfindungsgemäßen Systems können bei günstigen Kosten aus korrosionsbeständigen Materialien hergestellt werden, z.B. die Leitungen und Teile der Schalteinheit aus Kupfer oder VA-Stahl, ebenso aus Kunststoff. Auch könnte die gesamte Zisterne bzw. weitere Teile des Zisternensystems aus Kunststoff, Metall sein, wobei die Werkstoffe beliebig kombinierbar sind.

Die erfindungsgemäße Schalteinheit, bestehend aus dem das Auslaufelement aufweisenden beweglichen rohr- oder rinnenförmigen Umleitelement, der Entnahmeleitung und dem mit einem Auslauf versehenen Wassersammelbehälter ermöglicht die Festlegung eines eindeutigen Umschaltpunktes. Bei Regenbeginn wird das zunächst abgeschwemmten Schmutz enthaltende Regenwasser in die Kanalisation geleitet. Zugleich wird aus dem - in ausreichender Menge - fließenden Wasser im Auslaufelement ein Teilstrom in die Entnahmeleitung abgezweigt und in den Wassersammelbehälter geleitet. Ist dieser mit einer vorbestimmten Wassermenge gefüllt, wird ein Schaltvorgang ausgelöst, aufgrunddessen das bewegliche Umleitlelement verstellt wird.

Hier verringert sich der Abstand x, und weiteres Regenwasser wird dann in die Zisterne eingeleitet.

Im Regenwasserzulauf kann eine Drosselung/Dämpfungseinrichtung wie eine Klappe vorgesehen sein, um eine gleichmäßige Anströmung zu erzielen. Vorteilhaft bei der erfindungsgemäß vorgesehenen Schalteinheit jedenfalls ist stets, daß die Strömung des Regenwassers im Umleitelement frei und ohne Rückstau ist und daß der Umleit- bzw. Entnahmestrom für den Wassersammelbehälter ohne jegliches Anströmen erfolgt. Die Wasserströmung in die Entnahmeleitung ist praktisch ohne Änderung der Fließrichtung und praktisch weiter horizontal. Auf diese Weise ist eine definierte Anströmung und Abzweigmenge gegeben, wobei aus der Wasserströmung und nicht vom Boden einer Leitung und dergleichen mit entsprechender Verschmutzungsmöglichkeit abgezweigt wird. Es kann praktisch jede Wassermenge umgeschaltet werden. Eine Einstellmöglichkeit in bezug auf z.B. die Dachgröße kann durch Änderung der Stellung der Entnahmeleitung vorgesehen sein. Des weiteren können auch verschiedene Entnahmeniveaus vorgesehen sein, um eine maximale Wassernutzung und optimale Steuerung der Umschaltung zu gewährleisten.

Bei dem erfindungsgemäßen Zisternensystem ist der Wassersammelbehälter zweckmäßig z.B. mittels eines Bügels schwenkbar und/oder mit der Verschwenkung des Umleitelements gekoppelt. Auf diese Weise umfaßt die mechanische Schalteinheit wenig Teile und ist direktwirkend.

Vorteilhaft ist zur Bemessung des Füllgrades des Wassersammelbehälters bzw. zur Festlegung des Umschaltpunktes ein Zusatzgewicht vorgesehen. Entspricht das Gewicht des im Wassersammelbehälter vorhandenen Wassers dem Zusatzgewicht, so wird ein Umschaltvorgang ausgelöst. Das Gewicht ermöglicht eine einfache Einstellung des Umschaltpunktes. Andernfalls müßten der ggf. verstellbar vorgesehene Auslaufquerschnitt des Wassersammelbehälters oder die Rohrquerschnitte der Entnahmeleitung oder eine hierfür vorgesehene Aufhängung des beweglichen Umleitelements geändert werden.

Ist der Regen indessen gering (Nieselregen, Niederschlag bei Nebel, etc.) und somit auch ohne Abschwemmeffekt, wird aufgrund des Abstandes x zwischen Entnahmeleitung und Auslaufelement kein Wasser durch die Entnahmeleitung dem Wassersammelbehälter zugeführt. Bei etwas stärkerem, aber immer noch mengenmäßig geringem Regen fließt durch die Entnahmeleitung eingeleitetes Wasser durch den Wassersammelbehälter hindurch, d.h. aus diesem wieder aus, ohne daß dieser sich füllt. Das Regenwasser wird daher in beiden Fällen in die Kanalisation eingeleitet. Schließt sich ein solch geringer Regenfall an einen vorherigen stärkeren Regenfall an, kann durch entsprechende Bemessung des Auslaufquerschnitts die Zeit bis zur Rückschaltung so gewählt werden, das kurzfristige Regenunterbrechungen nicht zu einer Rückschaltung führen und so der aufgefangene Regen optimal der Speicherung zugeführt werden.

Zweckmäßig weist der Wassersammelbehälter einen Deckel auf, der ein Überschwappen von Wasser beim Einlaufen und nach dem Schaltvorgang verhindert.

Bei einem bevorzugten Ausführungsbeispiel des erfindungsgemäßen Zisternensystems ist der Einlauf der Entnahmeleitung mit vorteilhaft verstellbarem Abstand vom Boden des Umleitelements angeordnet. Wird dann beispielsweise das Umleitelement in Richtung der Entnahmeleitung verschwenkt, kann diese bei einem Ausführungsbeispiel der Erfindung praktisch in Anlage an den Boden des Umleitelementes gelangen. Dies ermöglicht es, auch bei später nachlassendem Regen noch lange Wasser zum Wassersammelbehälter zu entnehmen und auf diese Weise eine weitere Zisternenbefüllung sicherzustellen.

Zweckmäßig sind das bewegliche Umleitelement und die Entnahmeleitung in bezug auf einander und/oder einzeln verstellbar (Abstand x). Nur geringer Regenfluß erreicht dann die Entnahmeleitung nicht, die so von ganz stark verschmutztem Regenwasser frei gehalten wird. Es fließt in solchen Fällen ohne ausreichenden Abschwemmeffekt überhaupt kein Wasser in den Wassersammelbehälter. Weiterhin kann vorteilhaft in der Entnahmeleitung ein Ventil vorgesehen sein, das eine Steuerung der abgeleiteten Wassermenge ermöglicht.

Auf diese Weise ist bei dem erfindungsgemäßen Zisternensystem stets sichergestellt, daß nur Regenwasser in die Zisterne eingeleitet wird, wenn ausreichend starker und genügend lang andauernder Niederschlag gefallen ist.

Zur Trennung zwischen dem Ablauf für verschmutztes Wasser und einem Zulauf zur Zisterne ist vorteilhaft eine Trennkante vorgesehen, so daß stets eindeutige Ablaufverhältnisse für das Regenwasser vorliegen.

Ebenfalls kann gemäß einem vorteilhaften Ausführungsbeispiel der Erfindung das bewegliche Umleitelement mit einem Schaltnocken in Eingriff stehen, der die beiden Stellungen des Umleitelements festlegt und die Schaltkennlinie steil macht.

Vorzugsweise ist in der Zisterne ein Schwimmer vorgesehen, der an den Wassersammelbehälter und/oder an das bewegliche Umleitelement gekoppelt ist. Mittels des Schwimmers kann so erreicht werden, daß bei bereits voller oder voll gewordener Zisterne ein Wasserzufluß in die Zisterne nicht oder nicht mehr möglich ist, indem das Umleitelement nicht umgeschaltet oder zurückgeschaltet wird und sämtliches weitere Regenwasser in die Kanalisation geleitet wird. Dies macht einen Zisternenüberlauf überflüssig.

Des weiteren kann bei dem erfindungsgemäßen Zisternensystem vorteilhaft vorgesehen sein, daß der Boden der Zisterne schräg verläuft, sowie, daß zumindest ein Kriechschutz, Sieb und/oder Filter für den Ablauf vorgesehen ist. Es kommt so weniger zu einer Verschmutzung des Zisternenbodens oder jedenfalls nur in einem bestimmten Bereich, so daß der Reinigungsaufwand geringer ist. Ebenso kann das Einwandern von Tieren in die Zisterne, ggf. zusätzlich durch Siebe verhindert werden. Grundsätzlich sind jedoch bei dem erfindungsgemäßen Zisternensystem keine Filter, Siebe und damit auch keine dementsprechenden Reinigungs- und Wartungsarbeiten erforderlich. Mittels eines zweckmäßig mit einer Pumpe versehenen Heberohrs kann Sediment und dergleichen vom Boden der Zisterne abgesaugt werden. Eine vollständige Entkopplung vom Abwassersystem ist so gewährleistet.

Vorteilhaft kann auch eine Pumpe mit Minimalabschaltung in der Zisterne vorgesehen sein, so daß keine Hausinstallation erforderlich ist. Des weiteren kann über Rohrtrenner die Einspeisung von Notwasser (Brauchwasser) in das System vorgesehen sein. Hierfür ist nur ein geringer Einbauaufwand erforderlich.

Es können bei dem erfindungsgemäßen Zisternensystem weiterhin eine oder mehrere Schalteinheiten, umfassend ein ein Auslaufelement aufweisendes bewegliches Umleitelement, eine Entnahmeleitung und einen mit einem Auslauf versehenen Wassersammelbehälter, getrennt von der Zisterne vorgesehen sein. Mit dieser Ausführung können verschiedene oder sehr große Dachflächen oder -bereiche mit ggf. unterschiedlicher räumlicher Orientierung getrennt genutzt werden und verschiedenen Regenauffangmengen Rechnung getragen werden. Es kann auch vorgesehen sein, das Wasser in mehrere Zisternen einzuleiten.

Bei dem erfindungsgemäßen Zisternensystem wird mit dem ersten Teil des auf den Sammelflächen aufgefangenen Regenwassers zunächst eine Spülung des Abwassersystems und der daran angeschlossenen Leitungen bewirkt. Das dann von den durch den Abschwemmeffekt gereinigten Sammelflächen kommende Regenwasser wird dann vollständig in die Zisterne geleitet. Durch den erfindungsgemäß exakt definierten Abschwemmeffekt ist die Qualität des gesammelten Wassers außerordentlich hoch, ohne daß es aufwendiger Filtersysteme oder dergleichen bedarf.

Das erfindungsgemäße System kann frostsicher in den Boden versenkt sein. Auf diese Weise gibt es dann auch keine optischen Beeinträchtigungen.

Der Aufbau des erfindungsgemäßen Zisternensystems ist modulartig und umfaßt z.B. als kombinierbare, nachrüstbare Module Zisterne, Schalteinheit(en), Abschaltvorrichtung (Schwimmer), Trennvorrichtung, Pumpensystem.

Die Erfindung wird im folgenden weiter anhand von zwei Ausführungsbeispielen eines Zisternensystem und der Zeichnung beschrieben, wobei die Beschreibung zur Erläuterung dient und als die Erfindung nicht einschränkend anzusehen ist. In der Zeichnung zeigen:
- FIG. 1: eine schematische Schnittansicht eines Aufbaus mit Schalteinheit auf einer Zisterne gemäß einem ersten Ausführungsbeispiel der Erfindung, wobei sich die Schalteinheit in einer Stellung mit Wassereinleitung in die Kanalisation befindet,
- FIG. 2: eine schematische Vertikalschnittansicht des Aufbaus von FIG. 1, wobei sich die Schalteinheit in einer Stellung mit Wassereinleitung in die Zisterne befindet,
- FIG. 3: eine schematische Schnittansicht einer Zisterne gemäß dem ersten Ausführungsbeispiel,
- FIG. 4: eine schematische Schnittansicht einer Trennvorrichtung, die die Zisterne vom Abwassersystem trennt, und
- FIG. 5: eine schematische Horizontalschnittansicht eines Zisternensystems gemäß einem zweiten Ausführungsbeispiel der Erfindung mit zwei Regenwasserzuläufen.

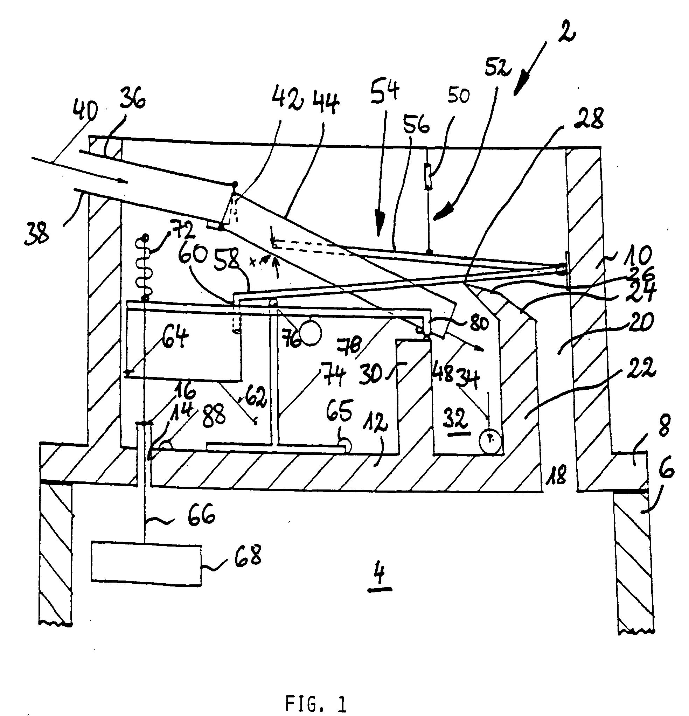

Im folgenden wird ein erstes Ausführungsbeispiel eines erfindungsgemäßen Zisternensystems anhand von FIG. 1 bis 4 beschrieben.

FIG. 1 zeigt im Schnitt einen Aufbau 2 eines Zisternensystems, der auf eine lediglich andeutungsweise dargestellte unterirdische Zisterne 4, d.h. auf deren gemauerte bzw. Betonwand 6, aufgesetzt ist. Der Aufbau 2 ist ebenfalls aus Beton mit einer mit einem auf der Betonwand 6 der Zisterne 4 sitzenden Außenflansch 8 versehenen Wand 10. In einer Ebene mit dem Außenflansch 8 erstreckt sich der Boden 12 des Aufbaus 2, während seine Decke nicht dargestellt ist. Im Boden 12 ist eine Öffnung 14 mit einem darauf angeordneten Anschlag 16 vorgesehen, die später erläutert werden. Ferner ist eine Fläche 18 für einen Zulauf 20 in die Zisterne 4 (vgl. Pfeile 21, 23) ausgespart. Eine Begrenzung der Fläche 18 bzw. des Zulaufs 20 ist durch die Wand 10 und die andere Begrenzung ist durch eine Trennwand 22 gebildet. Die Trennwand 22 ist am oberen Ende von der Begrenzungswand 10 fort abgeschrägt (24, 26) und endet in einer Trennkante 28. In einem Abstand von der Trennwand 22 ist in weiterer Entfernung von der Wand 10 eine weitere, etwas niedrigere Wand 30 angeordnet, die zusammen mit der Trennwand 22 einen Schacht 32 bildet. Die Wände 22 und 30 können als separate Teile aus einem anderen Material, z.B. Blech, Kunststoff, sein. Sie können dann z.B. in Führungsnuten im Boden 12 und in der Wand 10 sitzen, wobei entsprechende Dichtungen vorgesehen sind. Auf dem Boden des Schachts 32 ist ein zur Kanalisation führendes Ablaufrohr 34 verlegt.

Oben links in FIG. 1 ist in der Wand 10 ein Loch 36 als Durchführung für ein schräg angeordnetes Zulaufrohr 38 für aufgefangenes Regenwasser vorgesehen. Die Strömungsrichtung ist durch einen Pfeil 40 veranschaulicht. Zur Strömungsberuhigung ist am Ende des Zulaufrohrs 38 eine Klappe 42 oder ein anderes Strömungsberuhigungsinstrument vorgesehen. Mit, dem Zulaufrohr 38 schwenkbar verbunden ist ein als Umleitelement dienendes Auslaufrohr 44, das mittels eines Gelenks 46 schwenkbar ist. In der in FIG. 1 gezeigten Stellung mündet das Auslaufrohr 44 in den Schacht 32 (vgl. Pfeil 48) und das hindurch fließende Regenwasser wird über das Ablaufrohr 34 in die Kanalisation geleitet.

An der nicht dargestellten Decke ist eine flexible Höhenverstelleinrichtung und Aufhängung 50, 52 für eine Entnahmeleitung 54 angebracht, mittels der aus dem durch das Auslaufrohr 44 durchgeführten Strömung Wasser entnommen werden kann. Die Entnahmeleitung reicht in das oben mit einer entsprechenden Öffnung versehene Auslaufrohr 44 und endet mit spitzem Winkel mit Abstand von dessen Boden. Der Abstand kann mittels der oben erwähnten Höhenverstelleinrichtung 50 eingestellt werden, um die Entnahmemenge einzustellen. Eine weitere Einstellmöglichkeit kann vorgesehen werden, indem die Entnahmeleitung als Teleskoprohr ausgeführt und dessen Länge variiert wird. Die Entnahmeleitung 54 ist in mehrere Abschnitte unterteilt, einen Entnahmeabschnitt 56, einen quer verlaufenden, mittels einer Befestigungseinrichtung 59 an der Wand 10 befestigten Halterungsabschnitt 60, einen parallel zum Entnahmeabschnitt 56 verlaufenden Mündungsabschnitt 58 und einen Auslaufabschnitt 60. Der Auslaufabschnitt 60 reicht in einen beweglich, d.h. schwenkbar angeordneten, kastenartigen Wassersammelbehälter 62. Der Mündungsabschnitt 58 und der Auslaufabschnitt 60 können als Schlauch ausgeführt und dann an den wasserdicht ausgeführten Wassersammelbehälter 62 angeschlossen sein.

Der Wassersammelbehälter 62 ist mit einem nicht dargestellten Deckel mit Durchführung für den Auslaufabschnitt 60 der Entnahmeleitung 54 versehen. Ein Loch 64 dient zur Entleerung des Wassersammelbehälters und ist so bemessen, daß in einem bestimmten Zeitraum eine festgelegte Wassermenge ausströmt. Es kann zusätzlich ein Ventil vorgesehen sein. Das ausgeflossene Wasser fließt durch einen Ablauf 65 in die Kanalisation.

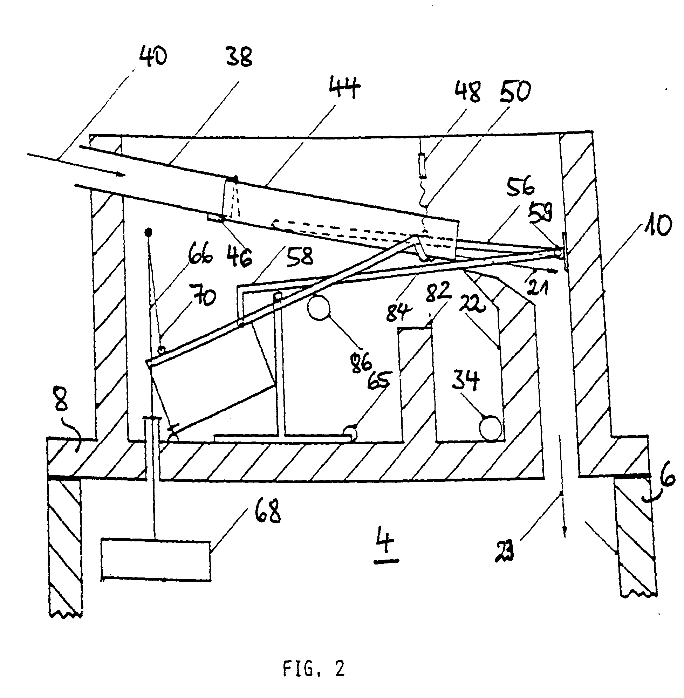

Eine durch den rohrförmig ausgebildeten Anschlag 16 verlaufende Hebestange 66 eines in der Zisterne 4 befindlichen Schwimmers 68 ist über eine flexible Verbindung 70 mit dem Wassersammelbehälter 62 verbunden. Die Verbindung ist dabei derart, daß der Schwimmer 68 bei hohem Wasserpegel in der Zisterne 4 den Wassersammelbehälter 62 in die obere Position anhebt, die in FIG. 1 dargestellt ist. In dieser Position ist die flexible Verbindung 70 unbelastet. Befindet sich der Wassersammelbehälter 62 indessen in der unteren Position, wie in FIG. 2 dargestellt, ist die flexible Verbindung 72 gespannt bzw. gestreckt. Wie noch erläutert wird, hat die obere Position des Wassersammelbehälters 62 zur Folge, daß das zulaufende Regenwasser gänzlich der Kanalisation zugeleitet wird.

Der Wassersammelbehälter 62 ist an einem Ende eines an einem Traggestell 74 mittels eines Gelenks 76 aufgehängten, schwenkbaren Bügels 78 befestigt. In FIG. 1 befindet sich Bügel 78 in der horizontalen Position, und sein anderes Ende mit sich nach unten erstreckendem Endabschnitt 80 liegt auf einem Dämpfungspuffer 82 auf der Wand 30 auf und befindet sich des weiteren auf der rohrendseitigen Seite eines Schaltnockens 84 in Anlage. Der Bügel 78 trägt in bezug auf den Wassersammelbehälter 62 jenseits des Traggestells 74 ein Zusatzgewicht 86, das zur Änderung des später noch erläuterten Schaltpunktes vorgesehen ist und einfach ausgetauscht oder geändert werden kann. Unterhalb des Wassersammelbehälters 62 befindet sich ein weiterer Dämpfungspuffer 88, auf den der Wassersammelbehälter 62 in der in FIG. 2 gezeigten unteren Position zur Anlage gelangt.

Wenn sich der Wassersammelbehälter 62 in der unteren Position wie in FIG. 2 gezeigt befindet, ist der Bügel 78 am anderen Ende nach oben verschwenkt und befindet sich unten am Auslaufrohr 44 auf der anderen Seite des Schaltnockens 84 in Anlage. In dieser Position liegt das Einlaufende der Entnahmeleitung 54 in Anlage auf dem Boden des Auslaufrohrs 44, das durch den Bügel 78 nach oben verschwenkt gehalten ist. In dieser Position erstreckt sich das Auslaufrohr 44 bei dem gezeigten Ausführungsbeispiel in im wesentlichen derselben Richtung wie das Zulaufrohr 38 und endet oberhalb der Trennkante 28 derart, daß das ausfließende Wasser in den Zulauf 20 in die Zisterne 4 fließt.

Die Umschaltung zwischen den beiden in FIG. 1 und 2 gezeigten Positionen erfolgt wie nun erläutert. Bei beginnendem Niederschlag befindet sich die gesamte Anordnung in der in FIG. 1 gezeigten Position. Das noch verschmutzte Regenwasser wird über das Ablaufrohr 34 in die Kanalisation geleitet. Eine geringe, aber zur Überwindung des Abstandes x ausreichende Wassermenge wird über die Entnahmeleitung 54 abgezweigt und strömt in den Wassersammelbehälter 62. Sofern die Niederschlagmenge gering ist, strömt das Wasser durch das Loch 64 wieder aus dem Behälter aus, ohne daß dieser gefüllt wird. Ist sie jedoch höher, nimmt das Gewicht des Wassersammelbehälters 62 mit zunehmender gesammelter Wassermenge zu, bis der Bügel 78 umgeschwenkt wird. Ein genauer Schwenk- bzw. Schaltpunkt wird durch den Schaltnocken 84 am Auslaufrohr 44 ermöglicht, der die Bügelposition exakt festlegt. Ebenso wird durch die Trennkante 28 eine genaue Trennung des Wasserzulaufs in Kanalisation und Zisterne ermöglicht. Bei hochgeschwenktem Bügel 78 läuft das Regenwasser über den Zulauf 20 in die Zisterne 4. Zugleich wird weiterhin etwas Wasser über die Entnahmeleitung 54 in den Wassersammelbehälter 62 geleitet. Reicht die Niederschlagmenge aus bzw. nimmt sie rechtzeitig vor Entleerung des Wassersammelbehälters 62 wieder zu, bleibt dieser weiterhin in der oberen Position und die Zisterne 4 wird gefüllt. Reicht sie nicht mehr aus, erfolgt wieder eine Umschaltung und der Wassersammelbehälter 62 nimmt dann wieder seine untere Position ein, bei der das Wasser aus dem Auslaufrohr 44 in die Kanalisation fließt.

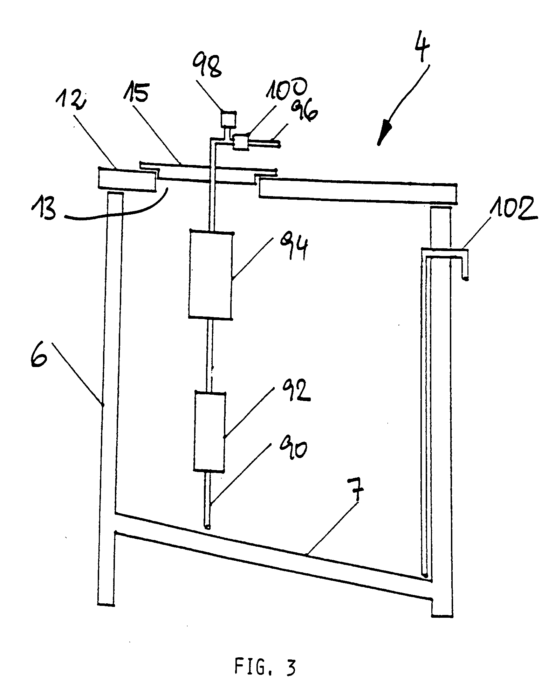

In FIG. 3 ist eine Schnittansicht der Zisterne 4 dargestellt. Im Boden 12, der die Zisterne abdeckt, ist eine Öffnung 13 als Zugang für Reinigungs- und Wartungsarbeiten vorgesehen und durch einen Deckel 15 verschlossen (Manndom). In der Zisterne 4 ist das Pumpen/Wasserversorgungssystem untergebracht. Es umfaßt ein Saugrohr 90, eine Pumpe 92, einen Druckspeicher 94 und ein Brauchwasserrohr 96, das zu dem Haus führt. Das Brauchwasserrohr 96 ist mit einem Druckschalter 98 und einem Rückschlagventil 100 versehen. Diese Teile sind in üblicher Weise ausgelegt und brauchen daher nicht weiter beschrieben zu werden. Durch die externe Anordnung des Pumpen/Wasserversorgungssystems ist eine Installation im Haus überflüssig und sämtliche Wartungs- und Reinigungsarbeiten können vor Ort durchgeführt werden.

Der Boden 7 der Zisterne 4 ist schräg, so daß sich eine Konzentration der unvermeidlichen Schwebstoffe am tiefsten Punkt ergibt. Auf diese Weise können diese und ähnliche unerwünschte Bestandteile des Zisternenwassers z.B. durch ein Heberohr 102 abgesaugt werden. Die vertikale Länge des Heberohrs 102 außerhalb der Zisterne 4 bestimmt, wieviel Wasser bei Vollfüllung abgesogen wird und wie groß der damit verbundene zusätzliche Reinigungseffekt ist.

Das Sedimentheberohr 102 kann auch mit einer Pumpe versehen sein, deren Einschaltzeitpunkte und deren Schaltdauer von verschieden wählbaren Parametern abhängig gemacht werden kann. In diesem Fall ist der Durchgang des Sedimentheberohrs durch den Behälter 4 überflüssig, das Wasser kann direkt in den Schacht 32 gepumpt werden. Somit ist dann auch eine vollständige Entkopplung vom Abwassersystem gewährleistet.

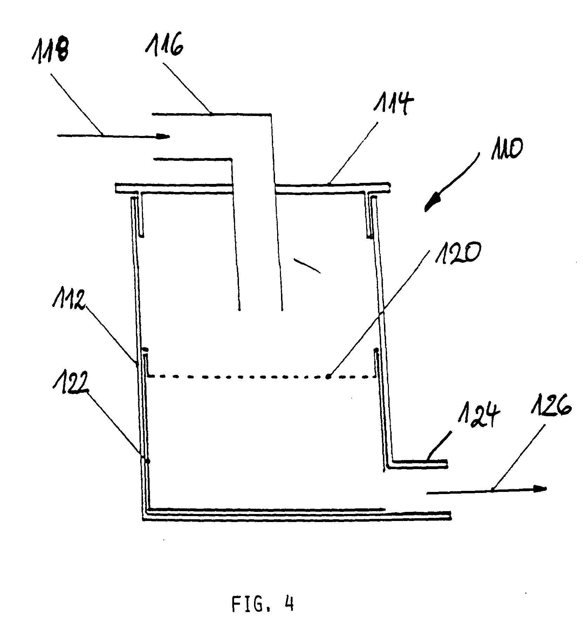

FIG. 4 zeigt eine Schnittansicht einer Trennvorrichtung 110, die in die von der Zisterne 4 zur Kanalisation führende Leitung eingebaut ist und zur Verhinderung des Rückkriechens von Tieren dient. Sie umfaßt ein Gehäuse 112 aus Beton mit einem Deckel 114, der drehbar ist, um vom Auslauf unabhängig zu sein. In den Rohrtrenner 110 durch ein Einlaufrohr 116 einlaufendes Wasser (vgl. Pfeil 118) durchläuft ein Sieb 120, das auch als Rückkriechsperre für Kleintiere wie z.B. Mäuse dient. Das Einlaufrohr 116 und das Sieb sind z.B. aus Kupfer oder bakterizidem, fungizidem oder viruzidem Material. Aus solchem Material ist auch ein unterhalb des Siebes 120 angeordneter Einsatz 122, der zu einem Auslauf 124 (vgl. Pfeil 126) offen ist. Die Trennvorrichtung 110 verhindert ein Wandern von Mikroorganismen und von Tieren in Richtung Zisterne, das die Wasserqualität beeinträchtigen könnte.

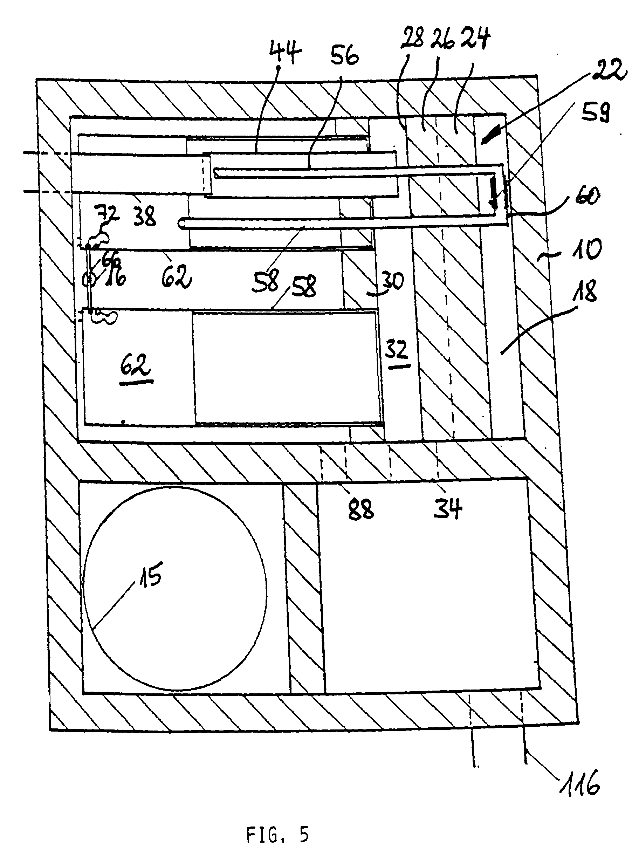

FIG. 5 veranschaulicht ein zweites Ausführungsbeispiel eines erfindungsgemäßen Zisternensystems. Dieses unterscheidet sich lediglich von dem vorher beschriebenen ersten Ausführungsbeispiel darin, daß zwei Schalteinheiten vorgesehen sind, um Regenwasser von zwei unterschiedlich angeordneten und verschmutzten Sammelflächen entsprechend dem Verschmutzungsgrad und der jeweils abfließenden Regenwassermenge der Zisterne 4 zuzuführen. Im übrigen sind sämtliche Bauteile gleich und daher mit denselben Bezugszeichen bezeichnet. Die Schalteinheiten sind für unterschiedlichen Vorlauf in die Kanalisation eingestellt, um die Gegebenheiten zu berücksichtigen.

## Patentansprüche

1. Zisternensystem mit
einer Zisterne (4),
einem Regenwasserzulauf (38, 40),
einem Ablauf (32, 34) für verschmutztes Wasser,
einem beweglichen Umleitelement, das ein Auslaufelement (44) zum Leiten des vom Regenwasserzulauf (38, 40) kommenden Regenwassers zum Ablauf (32, 34) für verschmutztes Wasser oder zur Zisterne (4) aufweist,
einer Entnahmeleitung (54), die vom Auslaufelement (44) abzweigt,
einem mit einem Auslauf (64) versehenen Wassersammelbehälter (62), dessen Füllgrad die Stellung des Auslaufelements (44) bestimmt,
dadurch **gekennzeichnet**, daß
das Einlaufende der Entnahmeleitung (54) in flachem Winkel zur allgemeinen Strömungsrichtung im Auslaufelement (44) angeordnet ist.

2. Zisternensystem nach Anspruch 1, dadurch **gekennzeichnet**, daß in der Zisterne (4) ein Schwimmer (68) vorgesehen ist, der an den Wassersammelbehälter (62) gekoppelt ist.

3. Zisternensystem nach Anspruch 1 oder 2, dadurch **gekennzeichnet,** daß in der Zisterne (4) ein Schwimmer (68) vorgesehen ist, der an das ein Auslaufelement (44) aufweisende bewegliche Umleitelement gekoppelt ist.

4. Zisternensystem nach einem der Ansprüche 1 bis 3, dadurch **gekennzeichnet**, daß das ein Auslaufelement aufweisende bewegliche Umleitelement ein Rohr (44) oder eine Rinne ist.

5. Zisternensystem nach einem der Ansprüche 1 bis 4, dadurch **gekennzeichnet**, daß das ein Auslaufelement aufweisende bewegliche Umleitelement und die Entnahmeleitung (54) in bezug aufeinander verstellbar und/oder einzeln verstellbar angeordnet sind.

6. Zisternensystem nach einem der Ansprüche 1 bis 5, dadurch **gekennzeichnet**, daß in der Entnahmeleitung ein Ventil vorgesehen ist.

7. Zisternensystem nach einem der Ansprüche 1 bis 6, dadurch **gekennzeichnet**, daß das ein Auslaufelement (44) aufweisende bewegliche Umleitelement und/oder die Entnahmeleitung (54) aufgehängt ist.

8. Zisternensystem nach einem der Ansprüche 1 bis 7, dadurch **gekennzeichnet**, daß eine Trennkante (28) vorgesehen ist, die eine Trennung zwischen dem Ablauf (32, 34) für verschmutztes Wasser und einem Zulauf (20) zur Zisterne sicherstellt.

9. Zisternensystem nach einem der Ansprüche 1 bis 8, dadurch **gekennzeichnet**, daß das ein Auslaufelement (44) aufweisende bewegliche Umlaufelement mit einem Schaltnocken (84) in Eingriff steht, der die beiden Stellungen des Umleitelements festlegt.

10. Zisternensystem nach einem der Ansprüche 1 bis 9, dadurch **gekennzeichnet**, daß der Wassersammelbehälter (62) schwenkbar und/oder mit der Verschwenkung des ein Auslaufelement (44) aufweisenden Umleitelements gekoppelt ist.

11. Zisternensystem nach einem der Ansprüche 1 bis 10, dadurch- **gekennzeichnet**, daß der Einlauf der Entnahmeleitung (54) mit Abstand (x) vom Boden des ein Auslaufelement (44) aufweisenden Umleitelements angeordnet ist.

12. Zisternensystem nach einem der Ansprüche 1 bis 11, dadurch **gekennzeichnet**, daß ein Zusatzgewicht (86) für die Festlegung der Stellung des ein Auslaufelement (44) aufweisenden Umleitelements und/oder des Umschaltpunkts vorgesehen ist.

13. Zisternensystem nach einem der Ansprüche 1 bis 12, dadurch **gekennzeichnet**, daß der Querschnitt des Auslaufs (64) des Wassersammelbehälters (62) einstellbar ist.

14. Zisternensystem nach einem der Ansprüche 1 bis 13, dadurch **gekennzeichnet**, daß der Wassersammelbehälter (62) einen Deckel aufweist.

15. Zisternensystem nach einem der Ansprüche 1 bis 14, dadurch **gekennzeichnet**, daß eine oder mehrere Schalteinheiten, umfassend ein ein Auslaufelement (44) aufweisendes bewegliches Umleitelement, eine Entnahmeleitung und einen mit einem Auslauf versehenen Wassersammelbehälter, getrennt von der Zisterne vorgesehen sind.

16. Zisternensystem nach einem der Ansprüche 1 bis 15, dadurch **gekennzeichnet**, daß der Boden (7) der Zisterne (4) schräg verläuft.

17. Zisternensystem nach einem der Ansprüche 1 bis 16, dadurch **gekennzeichnet**, daß ein insbesondere mit einer Pumpe versehenes Heberohr für die Absaugung von Sediment aus der Zisterne (4) vorgesehen ist.

18. Zisternensystem nach einem der Ansprüche 1 bis 17, dadurch **gekennzeichnet**, daß zumindest ein Kriechschutz, Sieb (120) und/oder Filter für den Ablauf vorgesehen ist.

19. Zisternensystem nach einem der Ansprüche 1 bis 18, dadurch **gekennzeichnet**, daß der Aufbau modulartig ist.

## Claims

1. Tank system having
a tank (4)
a rainwater inlet (38, 40)
an outlet (32, 34) for contaminated water,
a moveable by-pass element which comprises an outlet element (44) for conducting the rainwater, coming from the rainwater inlet (38, 40), to the outlet (32, 34) for contaminated water or to the tank (4),
a tapping line (54) which branches off from the outlet element (44),
a water collection container (62) provided with an outlet (64), of which the filling level determines the position of the outlet element (44),
characterised in that
the inlet end of the tapping line (54) is disposed at a shallow angle to the general direction of flow in the outlet element (44).

2. Tank system according to claim 1, characterised in that in the tank (4) a float (68) is provided which is coupled to the water collection container (62).

3. Tank system according to claim 1 or 2, characterised in that a float (68) is provided in the tank (4) and is coupled to the moveable by-pass element which comprises an outlet element (44).

4. Tank system according to one of claims 1 to 3, characterised in that the moveable by-pass element comprising an outlet element is a pipe (44) or a channel.

5. Tank system according to one of claims 1 to 4, characterised in that the moveable by-pass element comprising an outlet element, and the tapping line (54) are disposed so as to be displaceable with respect to each other and/or individually displaceable.

6. Tank system according to one of claims 1 to 5, characterised in that a valve is provided in the tapping line.

7. Tank system according to one of claims 1 to 6, characterised in that the moveable by-pass element comprising an outlet element (44), and/or the tapping line (54) is suspended.

8. Tank system according to one of claims 1 to 7, characterised in that a separating edge (28) is provided which ensures a separation between the outlet (32, 34) for contaminated water and an inlet (20) to the tank.

9. Tank system according to one of claims 1 to 8, characterised in that the moveable by-pass element comprising an outlet element (44) is in engagement with a switching cam (84) which fixes the two positions of the by-pass element.

10. Tank system according to one of claims 1 to 9, characterised in that the water collection container (62) is pivotable and/or is coupled to the pivoting motion of the by-pass element comprising an outlet element (44).

11. Tank system according to one of claims 1 to 10, characterised in that the inlet of the tapping line (54) is disposed at a distance (x) from the base of the by-pass element comprising an outlet element (44).

12. Tank system according to one of claims 1 to 11, characterised in that an additional weight (86) for fixing the position of the by-pass element comprising an outlet element (44) and/or of the switch-over point is provided.

13. Tank system according to one of claims 1 to 12, characterised in that the cross-section of the outlet (64) of the water collection container (62) is adjustable.

14. Tank system according to one of claims 1 to 13, characterised in that the water collection container (62) comprises a cover.

15. Tank system according to one of claims 1 to 14, characterised in that one or a plurality of switching units, including a moveable by-pass element comprising an outlet element (44), a tapping line and a water collection container provided with an outlet are provided separate from the tank.

16. Tank system according to one of claims 1 to 15, characterised in that the base (7) of the tank (4) extends in an inclined manner.

17. Tank system according to one of claims 1 to 16, characterised in that a lifting pipe provided in particular with a pump is provided for siphoning sediment from the tank (4).

18. Tank system according to one of claims 1 to 17, characterised in that at least one creep protection device, screen (120) and/or filter is provided for the outlet.

19. Tank system according to one of claims 1 to 18, characterised in that the structure is modular.

## Revendications

1. Système de citerne comprenant
une citerne (4)
une arrivée d'eau de pluie (38, 40),
un écoulement (32, 34) pour l'eau sale,
un élément de déviation mobile avec un élément-déversoir (44), pour diriger l'eau de pluie en provenance de l'arrivée d'eau de pluie (38, 40) vers l'écoulement (32, 34) pour l'eau sale ou vers la citerne (4),
un conduit de prélèvement (54) qui est branché sur l'élément-déversoir (44),
un bac de collecte d'eau (62) muni d'un écoulement (64), dont le degré de remplissage détermine la position de l'élément-déversoir (44),
caractérisé en ce que l'extrémité d'entrée du conduit de prélèvement (54) est disposée suivant un angle plat par rapport à la direction générale d'écoulement dans l'élément-déversoir (44).

2. Système de citerne selon la revendication 1, caractérisé en ce qu'il est prévu, dans la citerne (4), un flotteur (68) qui est couplé au bac de collecte d'eau (62).

3. Système de citerne selon la revendication 1 ou 2, caractérisé en ce qu'il est prévu, dans la citerne (4), un flotteur (68) qui est couplé à l'élément de déviation mobile comprenant un élément-déversoir (44).

4. Système de citerne selon une des revendications 1 à 3, caractérisé en ce que l'élément de déviation mobile comprenant un élément-déversoir est un tuyau (44) ou une goulotte.

5. Système de citerne selon une des revendications 1 à 4, caractérisé en ce que l'élément de déviation mobile comprenant un élément-déversoir et le conduit de prélèvement (54) sont montés avec possibilité de réglage l'un par rapport à l'autre et/ou individuellement.

6. Système de citerne selon une des revendications 1 à 5, caractérisé en ce qu'une vanne est prévue dans le conduit de prélèvement.

7. Système de citerne selon une des revendications 1 à 6, caractérisé en ce que l'élément de déviation mobile comprenant un élément-déversoir (44) et/le conduit de prélèvement (54) sont suspendus.

8. Système de citerne selon une des revendications 1 à 7, caractérisé en ce qu'il est prévu une arête de séparation (28) qui sépare l'écoulement (32, 34) pour l'eau sale de l'entrée (20) dans la citerne.

9. Système de citerne selon une des revendications 1 à 8, caractérisé en ce que l'élément de déviation mobile comprenant un élément-déversoir (44) est en prise avec une came de commutation (84) qui détermine les deux positions de l'élément de déviation.

10. Système de citerne selon une des revendications 1 à 9, caractérisé en ce que le bac de collecte d'eau (62) peut pivoter et/ou est couplé avec le pivotement de l'élément de déviation comprenant un élément-déversoir (44).

11. Système de citerne selon une des revendications 1 à 10, caractérisé en ce que l'entrée du conduit de prélèvement (54) est disposée à une distance (x) du fond de l'élément de déviation comprenant un élément-déversoir (44).

12. Système de citerne selon une des revendications 1 à 11, caractérisé en ce qu'il est prévu un poids additionnel (86) pour déterminer la position de l'élément de déviation comprenant un élément-déversoir (44) et/ou du point de commutation.

13. Système de citerne selon une des revendications 1 à 12, caractérisé en ce que la section transversale de l'écoulement (64) du bac de collecte d'eau (62) est réglable.

14. Système de citerne selon une des revendications 1 à 13, caractérisé en ce que le bac de collecte d'eau (62) comporte un couvercle.

15. Système de citerne selon une des revendications 1 à 14, caractérisé en ce qu'il est prévu séparément de la citerne, une ou plusieurs unité(s) de commutation comprenant un élément de déviation mobile avec un élément-déversoir (44), un conduit de prélèvement et un bac de collecte d'eau pourvu d'un écoulement.

16. Système de citerne selon une des revendications 1 à 15, caractérisé en ce que le fond (7) de la citerne (4) est incliné.

17. Système de citerne selon une des revendications 1 à 16, caractérisé en ce qu'il est prévu un tuyau d'aspiration muni notamment d'une pompe pour le siphonnage de sédiment dans la citerne (4).

18. Système de citerne selon une des revendications 1 à 17, caractérisé en ce qu'il est prévu au moins une protection contre les animaux rampants, tamis (120) et/ou filtre pour l'écoulement.

19. Système de citerne selon une des revendications 1 à 18, caractérisé en ce que la construction est de type modulaire.
